# EUROPEAN PATENT SPECIFICATION

(11) **EP 2 763 055 B1**
(45) Date of publication and mention of the grant of the patent: **31.05.2017**
(21) Application number: 14153709.2
(22) Date of filing: 03.02.2014
(51) Int. Cl.: G06F 17/30

(54) **A telecommunication method and mobile telecommunication device for providing data to a mobile application**
Kommunikationsverfahren und Mobiltelekommunikationsvorrichtung zur Bereitstellung von Daten an eine mobile Anwendung
Procédé de télécommunication et dispositif de télécommunication mobile pour fournir des données à une application mobile

(30) Priority: 04.02.2013 US 201313758679
(43) Date of publication of application: 06.08.2014
(73) Proprietor: SAP SE, 69190 Walldorf (DE)
(72) Inventor: Sitt, Simon, 69190 Walldorf (DE)
(74) Representative: Richardt Patentanwälte PartG mbB

(56) References cited:
- WO-A1-2009/037363
- US-A1- 2002 174 138
- US-A1- 2003 051 104
- GARCIA-MOLINA H ET AL: "MAIN MEMORY DATABASE SYSTEMS: AN OVERVIEW", IEEE TRANSACTIONS ON KNOWLEDGE AND DATA ENGINEERING, IEEE SERVICE CENTER, LOS ALAMITOS, CA, US, vol. 4, no. 6, 1 December 1992 (1992-12-01), pages 509-516, XP001167057, ISSN: 1041-4347, DOI: 10.1109/69.180602
- HASSO PLATTNER: "A Common Database Approach for OLTP and OLAP Using an In-Memory Column Database", SIGMOD-PODS '09 : COMPILATION PROCEEDINGS OF THE INTERNATIONAL CONFERENCE ON MANAGEMENT DATA & 28TH SYMPOSIUM ON PRINCIPLES OF DATABASE SYSTEMS ; PROVIDENCE, RHODE ISLAND, USA, ASSOCIATION FOR COMPUTI , 29 June 2009 (2009-06-29), page 7pp, XP009137547, ISBN: 978-1-60558-551-2 Retrieved from the Internet: URL:www.sigmod09.org/images/sigmod1ktp-pla ttner.pdf
- LUZ DE LA V ET AL: "Automatic data migration for reducing energy consumption in multi-bank memory systems", PROCEEDINGS OF THE 39TH ANNUAL DESIGN AUTOMATION CONFERENCE; NEW ORLEANS, LA, USA; JUNE 10 - 14, 2002; [DESIGN AUTOMATION CONFERENCE : DAC; ISSN 0738-100X], ASSOCIATION FOR COMPUTING MACHINERY ; INSTITUTE OF ELECTRICAL AND ELECTRONICS ENGINEERS, US, vol. CONF. 39, 10 June 2002 (2002-06-10), pages 213-218, XP002340853, DOI: 10.1145/513918.513973 ISBN: 978-1-58113-461-2

## Description

### Field of the invention

The disclosure relates to telecommunication systems, and particularly to a method for providing data to a mobile application.

### Background

Mobile devices such as smartphones, tablets, and smart TVs, have become mainstream computing devices. It is expected that several hundreds of millions of mobile devices will be sold in the next years. Application programs in the mobile devices provide a variety of accessible functionalities, for example, picture management and navigation tools etc.

LUZ DE LA V ET AL: "Automatic data migration for reducing energy consumption in multi-bank memory systems",PROCEEDINGS OF THE 39TH ANNUAL DESIGN AUTOMATION CONFERENCE; NEW ORLEANS, LA, USA; JUNE 10 - 14, 2002; [DESIGN AUTOMATION CONFERENCE : DAC; ISSN 0738-100X], ASSOCIATION FOR COMPUTING MACHINERY ; INSTITUTE OF ELECTRICAL AND ELECTRONICS ENGINEERS, US, vol. CONF. 39, 10 June 2002 (2002-06-10), pages 213-218, shows an architecture for reducing energy consumption by allowing migration of memory banks to be placed in a low power operating mode.

However, the application performance of a mobile device is mainly constrained by the storage performance of the mobile device and the access to the data stored in the mobile device. Therefore, there is a continuous need to improve the storage performance of the mobile devices.

### Summary of the invention

In accordance with the present invention, a method as set forth in the independent claim 1 is provided and a mobile telecommunication device as set forth in the independent claim 6 is provided. Additional embodiments of the invention are described in the dependent claims.

In one example, the invention relates to a telecommunication method for providing data to a mobile application installed in a mobile telecommunication device, the mobile telecommunication device comprising first and second storage devices, the first storage device comprises a non-volatile memory and the second storage device comprises a volatile memory, the data being stored in a relational database in the first storage device, wherein the mobile application is configured to access the data using a first access coding comprising a first set of instructions of a first programming language, wherein the mobile telecommunication device operates in a default energy consuming mode, the mobile telecommunication device comprising a generation, validation and an analysis unit, the method comprising automatically:
- switching, by the analysis unit, from the default energy consuming mode to an energy saving mode for running the mobile application; thereby
- generating, by the generation unit, a data structure in the second storage device and copying the data from the relational database into the generated data structure;
- generating, by the generation unit, a second access coding comprising a second set of instructions of a second programming language for providing the data stored in the second storage device to the mobile application, wherein the generating comprises converting the first set of instructions to the second set of instructions using a predefined correspondence table of the first and second programming languages;
- generating, by the validation unit, first and second queries for querying the data on the first and second storage devices using the first and second access coding respectively;
- comparing, by the analysis unit, the results of the first and second queries, and controlling the mobile application to access the data in the second storage device using the second access coding based on the comparison results.

These features may be advantageous as they may provide a controlled operation of the mobile telecommunication device that may, for example, prevent a bottleneck when accessing data in the first storage device. This may also have the advantage of saving energy or power in the mobile telecommunication device when switching to the energy saving mode i.e. accessing the data in the volatile memory (e.g. main memory of the mobile telecommunication device) instead of the first storage device. The first storage device (i.e. non-volatile memory) may be for example a solid state disk (SSD) drive or a hard disk (HD) drive.

According to one embodiment, the generating of the data structure in the second storage device comprises:
- generating, by the generation unit, in the second storage device an intermediate data structure for storing the data in the intermediate data structure using a column-based storage technique;
- copying, by the generation unit, the relational database into the second storage device;
- generating, by the validation unit, a test program for accessing the data stored in the relational database and the intermediate data structure in the second storage device using the second access coding, wherein the test program comprises at least a part of the mobile application;
- running, by the validation unit, the test program on the intermediate data structure and the relational database and determining a respective first and second number of cache misses;
- selecting, by the analysis unit, one of the intermediate data structure and the relational database as the data structure based on the comparison between the first and second number of cache misses.

The data may be stored in the relational database using a row-based storage technique.

For example, if the comparison reveals that the difference number between first and second number of cache misses is below a predefined minimum cache miss threshold number, the analysis unit may select (keep) the data structure as in the relational database format (i.e. row based format). However, if the difference number is high enough i.e. higher than the minimum cache miss threshold number the analysis unit may select the intermediate data structure as the data structure i.e. choosing the column-based storage technique.

For example, the mobile application may comprise a set of instructions. The mobile application may be divided into multiple modules, each module comprises a subset of instructions of the set of instructions. The test program may comprise the part of the mobile application such as a program module of the mobile application that performs I/O activities to access the data. In another example, the test program may be the mobile application. Running the test program by the validation unit may comprise controlling a processor of the mobile telecommunication device for executing the test program.

A cache miss refers to a failed attempt to read or write a piece of data in the cache, of the mobile telecommunication device which results in a (main) memory access which may be with a longer latency.

This embodiment may be advantageous, as it may further save energy in the mobile telecommunication device by choosing the right format (which format that triggers less cache misses) for storing data. This may also speed up the processing of the mobile application. Using column based storage technique may minimize data movement by leveraging the columnar (column-based) storage concept, compression, and performing calculations at the database level.

Relational databases organize data in tables that contain the data records. The difference between row-based and column-based storage is how the data is stored: row-based storage technique stores data in a sequence of rows. Column-based storage technique stores data in a sequence of columns, by for example, serializing all of the values of a column of a (corresponding) row-based stored table i.e. the relational database together, then the values of the next column, and so on.

According to one embodiment, the mobile telecommunication device further comprises information indicative of minimum processing resources required for running the mobile application with the first storage device, wherein the switching is performed in response to determining, by the analysis unit, at a first time point that available processing resources in the mobile telecommunication device are below required minimum processing resources by the mobile application.

According to one embodiment, the determining is triggered by an interaction of a user of the mobile application with the mobile telecommunication device, the interaction comprising a selection of an icon of the mobile application on a user interface of the mobile telecommunication device by the user.

According to one embodiment, the determining is performed during execution of the mobile application.

These embodiments may be advantageous as they may prevent system congestion that may be caused when running the mobile application with fewer resources than it requires.

According to one embodiment, the switching is performed upon receiving a request from a user of the mobile telecommunication device.

According to one embodiment, the method further comprises suspending the execution of the mobile application until the comparison is performed.

According to one embodiment, the method further comprises determining at a second time point that available processing resources in the mobile telecommunication device are higher than the required minimum processing resources and thereupon controlling the mobile application to access the data in the first storage device using the first access coding.

Switching back to the default energy consuming mode may be advantageous as it may provide more storage capacity compared to the memory.

According to one embodiment, the mobile application communicates with the first and second access coding via an application programming interface, API.

In another aspect, the invention relates to a computer program product comprising computer executable instructions to perform the method steps of the method of the preceding embodiments.

In another example, the invention relates to a mobile telecommunication device for providing data to a mobile application installed in the mobile telecommunication device, the mobile telecommunication device comprising first and second storage devices, the first storage device comprising a non-volatile memory and the second storage device comprising a volatile memory, the data being stored in a relational database in the first storage device, wherein the mobile application is configured to access the data using a first access coding comprising a first set of instructions of a first programming language, wherein the mobile telecommunication device operates in a default energy consuming mode, the mobile telecommunication device comprising:
- an analysis unit for switching from the default energy consuming mode to an energy saving mode for running the mobile application; thereby
- a generation unit for generating a data structure in the second storage device and copying the data from the relational database into the generated data structure; and generating a second access coding comprising a second set of instructions of a second programming language for providing the data stored in the second storage device to the mobile application, wherein the generating comprises converting the first set of instructions to the second set of instructions using a predefined correspondence table of the first and second programming languages;
- a validation unit for generating first and second queries for querying the data on the first and second storage devices using the first and second access coding respectively; wherein the analysis unit compares the results of the first and second queries, and controlling the mobile application to access the data in the second storage device using the second access coding based on the comparison results.

In another example, the invention relates a database migration and validation system, comprising:
a relational database;
relational database access coding to call the relational database, read and write to the relational database, and receive calls from the relational database;
a migration framework to analyze the relational database access coding, including calls made by and to the relational database access coding and reading and writing performed by the relational database access coding, to analyze the data structures of the relational database, and to generate an in-memory database; and
a validation framework to test the in-memory database generated by the migration framework;
wherein the migration framework is to write the relational database into a computing device to generate the in-memory database;
the migration framework is to generate in-memory access coding and in-memory database coding;
the migration framework is to generate data structures of the in-memory database and write data from the relational database into the in-memory database;
the validation framework is to query the relational database by calling the relational database access coding and query the in-memory database by calling the in-memory access coding; and
the validation framework is to compare the results of the queries and report the outcome of the comparison.

According to one embodiment, the database migration and validation system further comprises preprocessing coding to format and transform data for entry into the relational database;
wherein the migration framework analyzes the data formatting and transformation performed by the preprocessing coding.

According to one embodiment, the database migration and validation system further comprises application coding having a user interface and configured to call the relational database access coding and the in-memory access coding.

According to one embodiment, the application coding is not changed by the migration framework.

According to one embodiment, the in-memory database, the in-memory access coding, and the in-memory database coding are generated in a separate computing device from the computing device containing the relational database and relational database access coding.

According to one embodiment, the separate computing device is a portable computing device.

According to one embodiment, the migration framework analyzes multiple relational databases and the relational database access coding for multiple relational databases.

According to one embodiment, the migration framework consolidates multiple relational databases into one in-memory database.

According to one embodiment, the migration framework generates multiple in-memory databases.

According to one embodiment, the migration framework analyzes a predetermined portion of the relational database and relational database access coding.

According to one embodiment, the migration framework generates a copy of the in-memory database in a secondary storage device of the computing device.

According to one embodiment, wherein the validation framework presents multiple queries to the relational database and the in-memory database.

According to one embodiment, the validation framework reports the outcome of the comparison by transmitting a message containing identification information regarding at least one of the relational database access coding, the in-memory access coding, and the in-memory database coding.

In another example, the invention relates to a method for database migration and validation, comprising the steps of:
analyzing relational database access coding by a migration framework;
writing a relational database into an in-memory database by the migration framework;
generating an in-memory access coding and in-memory database coding by the migration framework based on the analysis of the relational database access coding;
generating data structures for the in-memory database and writing data from the relational database into the in-memory database by the migration framework;
querying the relational database and the in-memory database by a validation framework that calls the relational database access coding and the in-memory database access coding;
comparing the results received from the relational database and the in-memory database by the validation framework; and
reporting the outcome of the comparison by the validation framework.

According to one embodiment, the method for database migration and validation, further comprising the step of analyzing preprocessing coding relating to the relational database.

According to one embodiment, the migration framework analyzes multiple relational databases and the relational database access coding for multiple relational databases.

According to one embodiment, the migration framework analyzes a predetermined portion of the relational database and relational database access coding. According to one embodiment, the validation framework presents multiple queries to the relational database and the in-memory database;
the validation framework compares the results of the queries; and
the validation framework reports the results of each comparison by transmitting a message containing identification information regarding at least one of the relational database access coding, the in-memory access coding, and the in-memory database coding.

According to one embodiment, the in-memory database, the in-memory access coding, and the in-memory database coding are generated in a portable computing device separate from the device containing the relational database and relational database access coding.

In another example, the invention relates to a database migration and validation system, comprising:
a first computer system including a processor, a main memory, and a secondary storage device, the secondary storage device containing a first relational database, first relational database access coding, and first preprocessing coding, and further containing a second relational database, second relational database access coding, and second preprocessing coding;
wherein the first relational database access coding makes calls to, receives calls from, and reads and writes to the first relational database, and the first preprocessing coding formats and transforms data for entry into the first relational database; and
the second relational database access coding makes calls to, receives calls from, and reads and writes to the second relational database, and the second preprocessing coding formats and transforms data for entry into the second relational database;
a second computer system including a processor, a main memory, and a secondary storage device;
a migration framework to analyze the first and second relational database access coding and the first and second preprocessing coding, and generate an in-memory database; and
a validation framework to test the in-memory database generated by the migration framework;
wherein the migration framework analyzes the first and second relational databases, the calls made by and received by the first and second relational database access coding, the reading and writing performed by the first and second relational database access coding, and the data formatting and transformation performed by the first and second preprocessing coding, and generates an in-memory database, in-memory access coding, and in-memory database coding in the second computer system;
the generation of an in-memory database by the migration framework includes generating data structures for the in-memory database and writing data from the relational database into the in-memory database;
the migration framework generates a copy of the in-memory database in the secondary storage device of the second computer system;
the validation framework presents a set of queries to the first and second relational databases by calling the first and second relational database access coding and first and second preprocessing coding, and presents the set of queries to the in-memory database by calling the in-memory access coding;
the validation framework compares the result of each query received from the first and second relational databases to the result received from each query received from the in-memory database, and reports the outcome of each comparison; and
the second computer system is separate from the first computer system.

In-memory databases provide a solution to these issues. In-memory databases are contained within the main memory of a computer system or other device, which has the advantage of faster data access and faster program execution. In-memory databases also enable real-time operation on a computer or device, or on multiple computers or devices communicating through wired or network connections. An example of an in-memory database may comprise at least part of the SAP HANA in-memory database system.

One benefit of an in-memory database in comparison to a relational database is that database coding may be executed directly in the in-memory database, instead of being executed elsewhere, such as an application server or other computing device, for example, thereby avoiding time-consuming communication between the database and the application server or other computing device. This allows an in-memory database to provide faster data access and faster program execution while handling data structures as complex, or more complex, than a relational database. Additionally, instead of optimizing code to reduce the number of data accesses as is common in relational databases, the in-memory database coding may be better adapted to the application at issue.

A copy of the in-memory database may be maintained in secondary storage for non-volatile storage. This is beneficial in that changes to the coding and data structures of the in-memory database may be retained in the event the contents of the main memory are cleared or otherwise lost, such as, for example, when power is no longer provided to a computing device.

However, the conversion from relational databases to in-memory databases has disadvantages. Database coding must be reprogrammed and recoded; for example, coding contained and executed in an application which accesses a relational database may need to be adapted for implementation in an in-memory database, and may be partly located and executed within an in-memory database. Accordingly, the creation of in-memory databases and the coding for in-memory databases requires considerable programming labor and may result in the duplication of previous programming work. In addition, the risk of programming mistakes are increased by the reprogramming and recoding process, and error-checking consumes significant additional time and labor resources.

Embodiments of the present invention provide a system and method to migrate relational databases, or portions thereof, to in-memory databases, and to validate this migration. The system and method may provide for the automatic generation of in-memory database coding and data structures for in-memory databases using the existing relational database coding and data structures, thereby avoiding the labor and time costs of manual reprogramming and recoding. The migration framework may also write data from the relational databases into the in-memory databases. The migration framework may further generate a copy of the in-memory database in secondary storage for non-volatile storage of the in-memory database. Additionally, the system and method may include an automatic validation framework, which compares the output of relational database and in-memory database application calls or queries to detect errors. The validation framework reduces the need for error-checking labor, and allows programming personnel to direct their attention to identified problem areas.

The system and method may be used to migrate and validate relational databases in their entirety to in-memory databases, or to migrate and validate designated portions thereof, depending upon design objectives and user requirements. Complete migration of a relational database to an in-memory database allows for the relational database to be discarded or archived following validation of the in-memory database, and for further development to continue in the in-memory database. Alternatively, if a complete or partial migration of a relational database to an in-memory database is performed, the relational database may be utilized for further development while the in-memory database is available to users. New developments implemented in the relational database can subsequently be integrated into the in-memory database using the migration and validation system.

An additional benefit of this system and method is that the migration from a relational database to an in-memory database, and the subsequent validation, may be performed so that there is no change to user-level application coding. Taking this approach, the application coding and user interfaces operating with the in-memory database will appear and function in the same manner as when operating with the relational database.

Embodiments of the present invention will be described in detail in the exemplary embodiments presented in the drawings and disc

### Brief description of the drawings

FIG. 1 is a block diagram showing the migration of a computer system containing a relational database to a computer system containing an in-memory database according to an exemplary embodiment.
FIG. 2(a) is a block diagram showing a migration framework operating between a relational database and an in-memory database according to an exemplary embodiment.
Fig. 2(b) is a block diagram showing a validation framework operating after the migration of the relational database to the in-memory database of Fig. 2(a) is completed according to an exemplary embodiment.
Fig. 3 is a flow chart of a method for the migration of a relational database to an in-memory database and the validation of this migration according to an exemplary embodiment
FIG. 4 schematically depicts a mobile telecommunication device according to the present disclosure.

### Detailed description

Embodiments of the present invention provide a database migration and validation system including a migration framework which analyzes a relational database and its associated access coding and preprocessing coding, and based on these analyses generates an in-memory database, in-memory access coding, and in-memory database coding for a computer system. The migration and validation system may also include a validation framework which presents validation queries to the relational database and the in-memory database, compares the results of the queries, and reports the outcome of the comparison.

It should be understood that the term coding refers to any computer programming, instructions, processes, and logic. Coding may include software classes as used in object-oriented programming, but the invention is applicable to all database programming implementations.

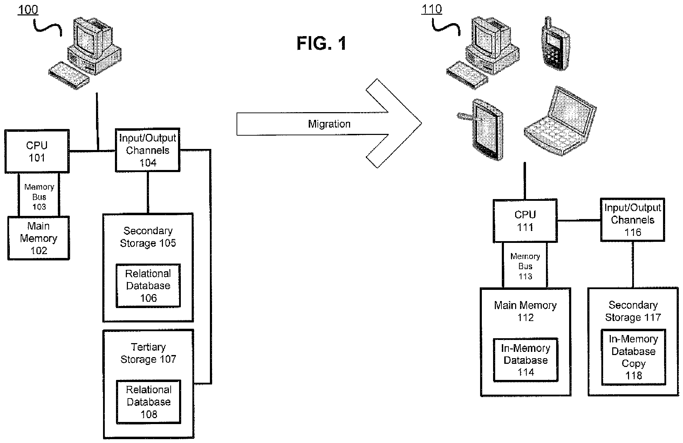

FIG. 1 illustrates a computer system 100 containing at least one relational database and a computer system 110 including at least one computer or other device containing an in-memory database according to an exemplary embodiment. Computer system 100 includes a computer system having a central processing unit (CPU) 101 and main memory 102 directly accessible to CPU 101 via memory bus 103. The CPU 101 utilizes input/output channels 104 to communicate with secondary storage 105 and tertiary storage 107. Secondary storage 105 may include hard disk drives or other mass data storage devices, and tertiary storage 107 may include including compact discs, flash memory drives, removable hard disk drives, magnetic tape drives, or other removable mass data storage media.

Computer system 100 contains at least one relational database. As shown in FIG. 1, relational database 106 is stored in secondary storage 105, and relational database 108 is stored in tertiary storage 107. However, multiple relational databases can be stored in secondary storage 105 and tertiary storage 107, and FIG. 1 should not be considered as limiting the disclosure in this manner.

One or more of the relational databases contained in secondary storage 106 and one or more of the relational databases stored in tertiary storage 107 may be migrated to computer system 110. Additionally, only selected portions of these relational databases may be migrated. Whether one or more of the relational databases stored in computer system 100 are migrated may be determined based on the design needs and objectives to be accomplished. Furthermore, whether only portions of the relational databases are migrated, or the relational databases are migrated in their entirety, is similarly determined by design needs and objectives.

As illustrated in FIG. 1, the relational databases are migrated to computer system 110. Computer system 110 includes at least one computer or device having a CPU 111 and a main memory 112 directly accessible to CPU 111 via memory bus 113. Computer system 110 further includes a secondary storage 117, in communication with the CPU 111 via input/output channels 116. The at least one computer or device comprising computer system 110 may be a server, a desktop computer, a laptop computer, a tablet computer, a smartphone, a personal digital assistant, a palm-top computer, or other portable computing device, or any combination of these devices. If multiple devices are included in computer system 110, data communication between the devices can be implemented using wired, wireless, or network connections.

Upon completion of migration, the relational databases of computer system 100, or portions thereof, may be contained as in-memory databases in main memory 112 of computer system 110. This is shown in FIG. 1 as in-memory database 114, but this disclosure is not limited to one in-memory database, and multiple in-memory databases may be generated as a result of the migration. The in-memory database may also be copied into secondary storage 117 of computer system 110, as indicated by numeral 118, to allow for non-volatile storage of the in-memory database 114. In-memory database copy 118 may be kept current with updates and other changes made to in-memory database 114. Once the migration is completed, the in-memory database 114 may be accessed by the computer system 110 or any other device in wired, wireless, or network communication with the computer system 110.

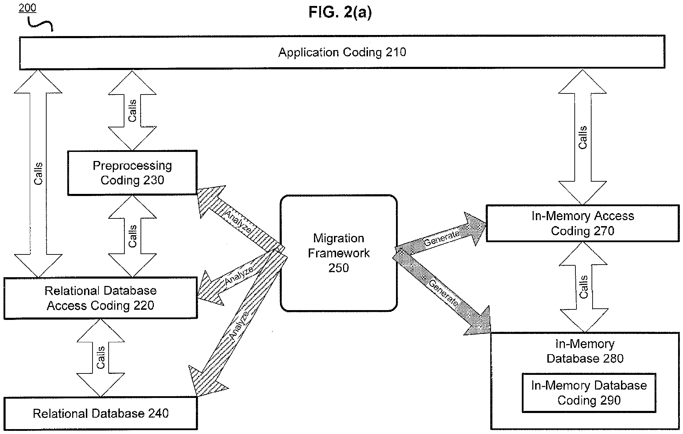

FIG. 2(a) is a block diagram showing the migration framework that operates to migrate a relational database and generate an in-memory database according to an exemplary embodiment.

Application coding 210 is illustrated in FIG. 2(a). This coding may form the basis of the application employed by the user to query or otherwise engage with relational database 240. The application coding 210 may be designed to interact with the relational database 240 based on input or instructions received from the user by calling the relational database access coding 220 and/or the preprocessing coding 230, if necessary.

The relational database access coding 220 may be coded to read and write to the relational database 240, and to make calls to and receive calls from the application coding 210 and the relational database 240. In addition, relational database access coding 220 may contain coding that reflects the relationships between different data structures, such as between two or more data tables. Database access coding 220 may contain relational connection information between data structures and allow access to this information, or may contain relational connection information between multiple relational databases. Relational database access coding 220 may contain a large amount of programming, instructions, processes, and logic and may require extensive validation to ensure proper operation.

FIG. 2(a) also illustrates preprocessing coding 230, which address data consistency and organizational issues. For example, when raw data is provided by a user or imported from other data sources, the raw data may be in a certain format, such as a unit of measure or currency, but data of this type may be stored in the relational database 240 in a different format. In this case, the raw data cannot be directly entered into the relational database 240, and preprocessing coding 230 may be called to convert the raw data into a format acceptable for entry and for subsequent analysis. Additionally, the preprocessing coding 230 may be needed following data entry and analysis, or after execution of a query, so that the data returned to the application coding 210 is in an acceptable format. Calls to the preprocessing coding 230 may be made by the application coding 210 and the relational database access coding 220, and calls may be made to these coding by the preprocessing coding 230. Preprocessing coding 230 may also perform data transformation operations, including removing data regarding relations between variables in the raw data, to place the raw data into a more suitable form for the relational database 240. Like the relational database access coding 220, preprocessing coding 230 may contain a large amount of programming, instructions, processes, and logic and may require extensive validation.

In order to implement the relational database 240 as an in-memory database, migration framework 250 is employed. As shown in FIG. 2(a), migration framework 250 analyzes the relational database access coding 220 and the preprocessing coding 230. Prior to the migration, the specific relational databases access coding 220 and the specific preprocessing coding 230 may be been identified to the migration framework 250, and the analysis performed by migration framework 250 may include static and dynamic analyses. For example, the analysis performed by the migration framework 250 may include statically analyzing the relational database 240 and the data structures contained therein, the relational database access coding 220, and the preprocessing coding 230. The analysis performed by the migration framework 250 may also include analyzing calls made to the relational database 240 by the relational database access coding 220, calls received by the relational database access coding 220 from the relational database 240, and reading and writing to the relational database 240 by the relational database access coding 220. The analysis may further include calls made by and received from the relational database access coding 220 to the application coding 210. The migration framework 250 may also analyze the data formatting and transformation performed by the preprocessing coding 230.

Based on this analysis, the migration framework 250 may generate programming, instructions, processes, and logic for the in-memory database. Coding for the in-memory database may include access coding executed outside of the in-memory database on, for example, an application server or other computing device, and database coding, which is executed in the in-memory database.

As shown in FIG. 2(a) the migration framework 250 may generate in-memory access coding 270 and in-memory database coding 290 for use with the in-memory database 280. The migration framework 250 converts the programming, instructions, processes, and logic of the relational database access coding 220 and the preprocessing coding 230 into programming, instructions, processes, and logic for the in-memory access coding 270 and the in-memory database coding 290 that is appropriate for an in-memory database. The migration framework also copies the relational database 240 by creating the data structures of the in-memory database 280 and writing the data contained in the relational database 240 into the in-memory database 280. Additionally, the migration framework 250 may copy the in-memory database 280 into a secondary storage device, for non-volatile retention.

The migration framework assigns the functions of the relational database access coding 220 and the relational database preprocessing coding 230 between the in-memory access coding 270 and the in-memory database coding 290. For example, the functions of the relational database access coding 220 may be contained entirely within the in-memory access coding 270, and the functions of the preprocessing coding 230 may be contained entirely within the in-memory database coding 290. Alternatively, the functions of the relational database access coding 220 may be contained partly in the in-memory access coding 270, with other functions remaining accessible for calling within the relational database access coding 220. These assignments may be made in any number of variations as required by design needs, efficiency, or other considerations.

The migration framework 250 is not limited to the migration of a single relational database to a single in-memory database. Multiple relational databases, stored in secondary memory, tertiary memory, or other memory may be migrated. Further, migration framework 250 is not limited to creating a single in-memory database, and may generate multiple in-memory databases during the migration of one or more relational databases. It may be beneficial, however, to consolidate the programming, instructions, processes, and logic from multiple relational database access coding and preprocessing coding into the in-memory access coding and the in-memory database coding.

The migration framework 250 can be managed by a technology professional, consultant, or other person with sufficient knowledge to configure the framework for the task at hand. For example, it may be desired to minimize the volume of data storage, or conversely it may be desired to store data redundantly. Additionally, when migrating multiple relational databases, it may be desired to create separate in-memory data databases or data structures for each relational database, to consolidate the relational databases into a single database or data structure, or to otherwise segregate the relational databases into multiple in-memory databases or data structures. The operation of the migration framework may also be configured in view of other constraints that may arise. In view of the faster data access capabilities of in-memory databases and depending on design needs, it may not be necessary for the migration framework to optimize the data structure of the in-memory database 280 to reduce instances where data access is needed.

Once the migration framework 250 completes the migration and the in-memory access coding 270, the in-memory database 280, and the in-memory database coding 290 have been generated, and data from the relational database 240 has been written into the in-memory database 280, a validation process must be performed. In view of the amount and complexity of programming, instructions, processes, and logic necessary for the relational database coding and the in-memory access coding and in-memory database coding, this can be a difficult and labor-intensive endeavor if performed manually.

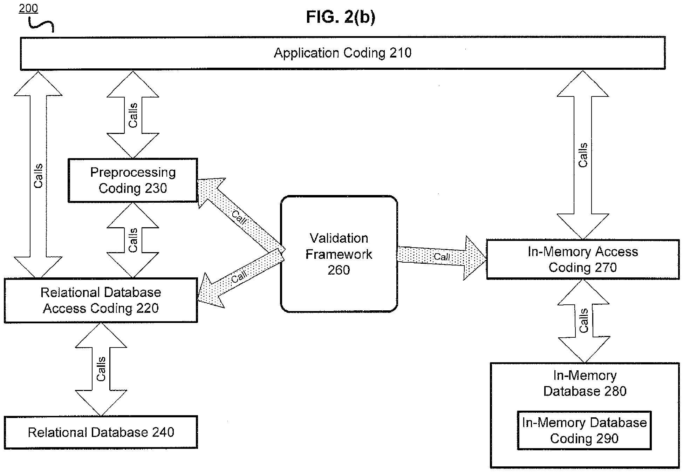

FIG. 2(b) is a block diagram showing the validation framework 260 operating after the migration of relational database 240 to in-memory database 280 by migration framework 250 according to an example embodiment. Given the volume and complexity of coding and data structures that may be present, the validation framework 260 may be configured to validate the migration automatically. This may be accomplished by presenting the same query to both relational database 240 and in-memory database 280 and comparing the result. In order for the migration to be successful, the same result for both queries should be returned to the validation framework 260.

For example, a validation query may be provided to the validation framework 260 by technology personnel in advance of the migration, or once the migration is completed. As shown in FIG. 2(b), upon receiving this instruction, the validation framework 260 queries the relational database 240 by calling relational database access coding 220, and also calling preprocessing coding 230, if necessary. Additionally, the validation framework 260 presents the same query to the in-memory database 280, by calling the in-memory access coding 270, which executes the query and calls the in-memory database coding 290, if necessary.

Upon receiving the result of each query, the validation framework 260 performs a comparison to determine if the same result has been returned by the relational database 240 and the in-memory database 280. Return of the same results by both the relational database 240 and the in-memory database 280 may indicate that both databases are operating in the same manner and that the migration has been correctly performed, and the validation framework 260 may send a confirmation message indicating that the query has been answered successfully. However, if the results do not match, the validation framework 260 may alert technology personnel of a potential problem with the migration, or send an error message for recordation and subsequent review. It may be helpful for technology personnel to provide names, numbers, or other identifiers for the validation queries, or for the coding or data structures implicated in the validation queries, to facilitate recognition of potential problem areas.

The validation framework 260 may not be limited to a single validation query. Instead, a number of validation queries may be initiated, depending on the data stored in the relational database 240 and the functionality of the relational database access coding 220 and the preprocessing coding 230. The data stored in the in-memory database 280 and the functionality of the in-memory access coding 270 and in-memory database coding 290 may also be considered in preparing validation queries. The validation framework 260 may perform as many queries and result comparisons as required to ensure the migration has been successful.

The automatic validation querying and result comparison performed by the validation framework 260 may provide considerable time and resource savings versus manual validation. Additionally, the results of unsuccessful validation queries may guide technology personnel in recognizing potential problem areas, and allow such personnel to focus on potential problem areas.

Another potential benefit of this approach is that the application coding 210 may remain unchanged. The application coding 210 calls the relational database access coding 220 and the preprocessing coding 230 in order to query the relational database 240, and during migration the migration framework 250 may configure the in-memory access coding 270 and in-memory database coding 290 to be operable with the existing code contained in the application coding 210. In addition to conserving time and programming resources, this may allow users to maintain continuity and familiarity with the existing application coding 210.

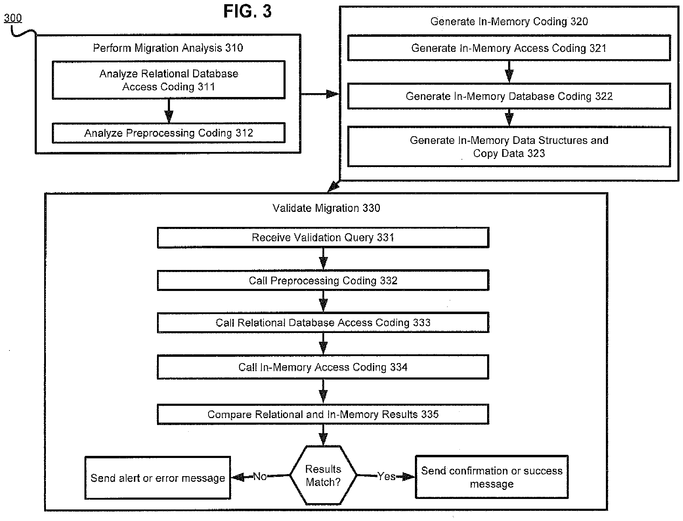

FIG. 3 is a flow chart of a method for migration and validation 300 of a relational database to an in-memory database according to an exemplary embodiment.

Once the migration framework has been configured and initiated, the first task is to perform the migration analysis, shown as block 310 in FIG. 3. The migration framework performs this task in two steps, analyzing the relational database access coding (311) and analyzing the preprocessing coding (312), and these steps may includes static and dynamic analyses. As an example, the migration framework may perform a static analysis of the relational database, the relational database access coding, and the preprocessing coding. The migration framework may further analyze relational database access coding calls to and from the relational database and the application coding, relational database access coding reading and writing to the relational database, and data formatting and transformation performed by the preprocessing coding. These tasks need not be performed in the order shown in FIG. 3, and instead the migration framework may analyze the preprocessing coding prior to analyzing the relational database access coding, or these analyses may be performed simultaneously. The order may be determined by technology personnel as required by efficiency considerations or design needs.

Next, the migration framework may generate in-memory coding (320). Using the results of the analyses shown in steps 311 and 312, the migration framework may generate in-memory access coding (321) and may generate in-memory database coding (322), in order to replicate the functionality of the relational database access coding and the preprocessing coding for the in-memory database. As with the steps 311 and 312, the steps of generating in-memory access coding (321) and generating in-memory database coding (322) may be performed in any order, or simultaneously. The migration framework also generates the data structures for the in-memory database and copies the data from the relational database into the in-memory database (323).

Once the in-memory access coding, in-memory database coding, in-memory database data structures and the data contained in the in-memory database are generated, the process of validating the migration (330) may begin. First, the validation framework receives a validation query, instruction, or request (331). The validation query may be provided prior to the performance of the migration, or may be supplied after the migration has been completed. Validation may be conducted immediately upon completion of the migration process, or at a later time; however, it is desirable that all necessary validation be completed prior to use of the in-memory database.

The next step in migration validation process 330 is for the migration framework to call the preprocessing coding of the relational database (332) and, if necessary, call the preprocessing coding (333), according to the validation query. The validation framework also presents the validation query to the in-memory database by calling in-memory access coding (334), which executes the query and may call the in-memory database coding, if needed. The validation framework may then compare the result of the validation query provided by the relational database to the results of the validation query provided by the in-memory database (335). If both results match, it may be indicative of a successful migration in that the relational database and the in-memory database are functioning in the same manner. The validation framework may then send a confirmation message indicating that the query has been performed successfully. Receipt of results that do not match may indicate that the migration has not been performed correctly, and the validation framework sends an error message or otherwise alerts technology personnel. The error message supplies guidance to direct technology personnel to potential problems areas for review, and may include identifiers for the coding or data structures involved in the validation query. the validation process 330 may be repeated for multiple validation queries.

The migration and validation method 300 is not limited to migrating one relational database to one in-memory database. One or multiple relational databases, or specific portions thereof, may be migrated to separate in-memory databases, consolidated into one in-memory database, or segregated into multiple in-memory databases. Regardless of the number of relational and in-memory databases involved in the migration process, it may be desirable to execute as many validation queries as required to test and validate all of the in-memory database functionality.

Once the migration and validation process is complete, many benefits of in-memory databases may be realized. For example, in-memory databases may deliver increased data access speed compared to relational databases stored outside of main memory, and consequently may provide faster program execution. Real-time program execution may also be implemented due to the increased speed of program execution. In-memory databases may also be accessed from desktop computers or portable devices such as laptop or tablet computers and smartphones, which may be placed in data communication using wired, wireless, or network connections.

It should be understood that there exist implementations of other variations and modifications of the invention and its various aspects, as may be readily apparent to those of ordinary skill in the art, and that the invention is not limited by specific embodiments described herein. Features and embodiments described above may be combined with and without each other. It is therefore contemplated to cover any and all modifications, variations, combinations or equivalents that fall within the scope of the basic underlying principals disclosed and claimed herein.

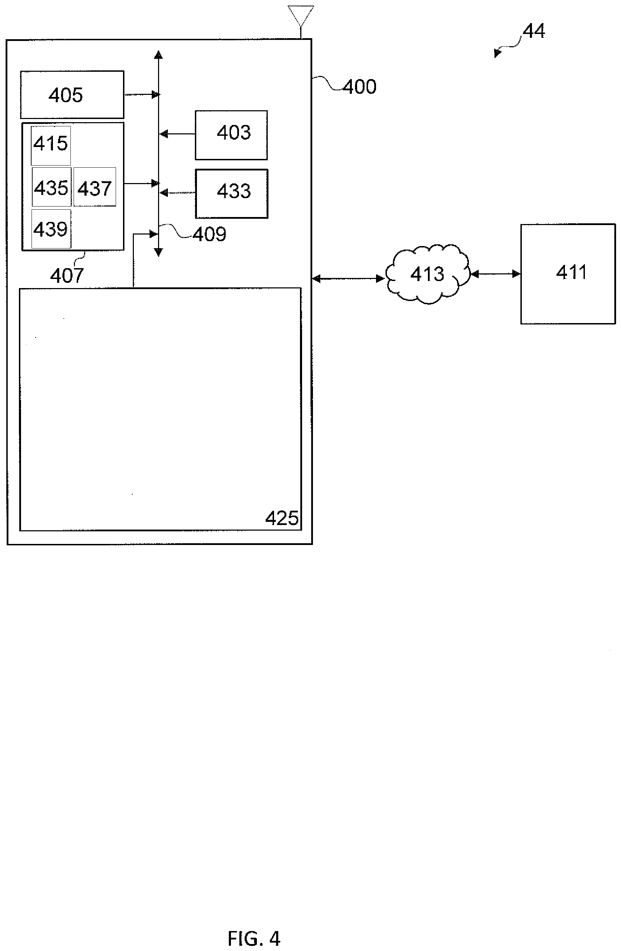

Fig. 4 shows an exemplary mobile telecommunication device 400 in a cellular-digital wireless telecommunication system 44. The mobile telecommunication device 400 may comprise a smartphone, PDA, a laptop, a smart TV or the like. The mobile telecommunication device 400 may comprise a processor 403, a transceiver 405, a memory 407 which is a volatile memory and a storage device 433 each capable of communicating with one or more components of the mobile telecommunication device 400. For example, all components are coupled to a bidirectional system bus 409. The storage device 433 may be a non-volatile memory such as a hard disk drive or a solid state drive.

The processor 403 may be a microprocessor, a single core processor, a multicore processor or the like. The processor 403 may control the operation of the mobile telecommunication device 400. The transceiver 405 can be implemented as a transmitting and receiving component of the mobile telecommunication device 400. The mobile telecommunication device 400 may further comprise a display 425 which displays characters and images and the like. The mobile telecommunication device 400 may operate in a default energy consuming mode. The default energy consuming mode refers to a mode with which the mobile telecommunication device 400 is operating before applying the energy saving mode as disclosed hereafter. The default energy consuming mode is different than the energy saving mode.

The mobile telecommunication device 400 may be connected to any other telecommunication device through an access network 413 such as cellular digital system telecommunication network 413. For example, the mobile telecommunication device 400 may be connected to a server 411 directly or via a base station (not shown) of the cellular-digital wireless telecommunication system 44. Using the transceiver 405 the mobile telecommunication device 400 is operable to exchange data or to communicate with the server 411 via the mobile cellular digital telecommunications network 413.

Memory 407 is configured to store a plurality of applications that are executable on the processor 403. For example, the memory 407 may comprise an operating system as well as mobile applications. A mobile application 415 of the mobile applications comprises instructions that, when executed, the mobile application 415 may access data stored in a relational database in the storage device 433 using a first access coding comprising a first set of instructions of (written in) a first programming language. The first programming language may be, for example, an Advanced Business Application Programming (ABAP) SAP language, C++, SQL, Fortran or any other programming language that can be used such that the first access coding may be used by the mobile application 415 to access data stored in the storage device 433.

Memory 407 further comprises a generation unit 435, validation unit 437 and an analysis unit 439. The generation unit 435, validation unit 437 and analysis unit 439 may each comprise a computer or a dedicated firmware or a hardware. The mobile telecommunication device 400 may comprise information indicative of minimum processing resources required to run the mobile application 415 on the mobile telecommunication device 400. For example, the information may be generated by the server 411 and received from the server 411. The information may be provided for different time intervals (i.e. time dependent information) and/or different locations (i.e. position dependent information) of the mobile telecommunication device 400. The processing resources may comprise the battery level or lifetime, CPU time, CPU usage and/or CPU processing power. This information may be, for example, obtained from historical data that indicate the average or peak CPU usage and/or amount of battery consumed by the mobile application 415 when running on the mobile telecommunication device 400 during a given time interval. In another example, the information may be obtained by running (e.g. running by the server 411) a test of the mobile application 415 on the mobile telecommunication device 400 to determine the resources that are needed or used to run the mobile application 415. This test may be done, for example, for different time intervals and/or different locations of the mobile telecommunication device 400. In another example, the information may be obtained using a simulation (e.g. performed by the server 411) based on a model of the mobile telecommunication device 400 and the mobile application 415 and taking into account different execution environments and conditions (e.g. running the mobile application alone or in parallel with different running mobile applications on the mobile telecommunication device 400) of the mobile application 415 in the mobile telecommunication device 400. The information may be time dependent, position dependent, user dependent or a combination thereof. The information may be associated to different users of the mobile telecommunication device 400. This may be advantageous as different users may have different usage practice of the mobile application 415, and thus the resources used or required by the mobile application 415 depend on the user.

The analysis unit 439 may determine at a first point in time that available processing resources (e.g. the level of remaining battery of the mobile telecommunication device 400 at the first point in time and/or the CPU usage at the first point time which may be due to other applications running on the mobile telecommunication device 400) in the mobile telecommunication device 400 are below required minimum processing resources by the mobile application 415. The determination may be triggered by a selection of an icon of the mobile application 415 on a user interface of the mobile telecommunication device 400 by a user of the mobile application 415. That is, the determination may be done before the mobile application 415 starts running. In another example, the determination may be performed while the mobile application 415 is running e.g. in a periodic basis or in a randomly chosen point in time. In this case, the execution of the mobile application 415 may be suspended or paused for a predefined pause time period.

In response to the determination that available processing resources in the mobile telecommunication device 400 are below required minimum processing resources by the mobile application 415, the analysis unit 439 may switch from the default energy consuming mode to an energy saving mode (since there are not enough resources) for running at least part of the mobile application 415. In another example, the switching may be triggered by a received request to switch to the energy saving mode from the user of the mobile telecommunication device 400. The switching to the energy saving mode may be done as described in the following paragraph. The generation unit 435 may generate a data structure in the memory 407 and copy the data from the relational database into the generated data structure. The data may be stored in the generated data structure using a row-based or column-based storage technique.

The generation unit 435 may also generate a second access coding comprising a second set of instructions of (written in) a second programming language for providing the data stored in the memory 407 to the mobile application 415. The generating of the second access coding comprises converting the first set of instructions to the second set of instructions using a predefined correspondence table of the first and second programming languages. The second programming language may comprise for example a HANA programming language, C, C++, SQL scripts or any other programming language that can be used such that the second access coding may be used by the mobile application 415 to access data stored in the memory 407. The correspondence table may indicate, for example, correspondence between programming statements, expressions and constructs such as conditional constructs or the like between the two programming languages. The conversion of the first set of instructions may comprise replacing the references to the storage device 433 in the first set of instructions by a reference to the memory 407, thereby obtaining the second set of instructions. The conversion of the first set of instruction may also comprise extracting first subroutines or first functions and their dependencies from the first set instructions and writing second functions corresponding to the first functions in the second programing language. A function of the second functions may comprise a combination of dependent functions of the first functions based on their dependencies, thereby simplifying the program flow, without losing the functionality or essence of the first access coding.

To validate the generated second access coding, the validation unit 437 may generate a first and second queries for querying the data on the storage device 433 and memory 407 using the first and second access coding respectively.

The analysis unit 439 may thus compare the results of the first and second queries, and based on the comparison results, the analysis unit 439 may control the mobile application 415 to access the data in the memory using the second access coding e.g. when the first and the second queries give the same query results or when the first query results comprises at least part of the second query results (e.g. the first query result comprise 10% to 100% of the second query results). However, if the results do not match, the analysis unit 439 may alert the user of the mobile telecommunication device 400 of a potential problem with the migration, or send an error message for recordation and subsequent review; and keep the default mode of operation of the mobile telecommunication device 400. It may be helpful for technology personnel to provide names, numbers, or other identifiers for the validation queries, or for the coding or data structures implicated in the validation queries, to facilitate recognition of potential problem areas. The mobile application 415 may comprise a user interface. The mobile application 415 may be configured to call both the first access coding and second access coding. In case the switching is performed during the execution of the mobile application 415, the controlling of the mobile application 415 comprises redirecting the communications (e.g. requests or queries, calls...) from the mobile application 415 toward the first access coding to the second access coding.

## Claims

1. A telecommunication method for providing data to a mobile application (415) installed in a mobile telecommunication device (400), the mobile telecommunication device (400) comprising first (433) and second (407) storage devices, the first storage device (433) comprises a non-volatile memory and the second storage device comprises a volatile main memory (407), the non-volatile memory comprising a hard disk drive, the data being stored in a relational database in the first storage device (433), wherein the mobile application (415) is configured to access the data using a first access coding comprising a first set of instructions of a first programming language, wherein the mobile telecommunication device (400) operates in a default energy consuming mode, the mobile telecommunication device (400) comprising a generation (435), validation (437) and an analysis unit (439), the mobile telecommunication device (400) further comprising information indicative of minimum processing resources required for running the mobile application (415) with the first storage device (433), the method comprising automatically:
- switching, by the analysis unit (439), from the default energy consuming mode to an energy saving mode for running the mobile application, the default energy consuming mode is different from the energy saving mode; wherein the switching is performed in response to determining, by the analysis unit (439), at a first time point that available processing resources in the mobile telecommunication device (400) are below required minimum processing resources by the mobile application (415), thereby
- generating, by the generation unit (435), a data structure in the second storage device and copying the data from the relational database into the generated data structure such that the database in the second storage device has a column based structure;
- generating, by the generation unit (435), a second access coding comprising a second set of instructions of a second programming language for providing the data stored in the second storage device (407) to the mobile application (415), wherein the generating comprises converting the first set of instructions to the second set of instructions using a predefined correspondence table of the first and second programming languages; wherein the conversion of the first set of instructions comprises replacing the references to the first storage device in the first set of instructions by a reference to the second storage device;
- generating, by the validation unit (437), first and second queries for querying the data on the first (433) and second (407) storage devices using the first and second access coding respectively;
- comparing, by the analysis unit (439), the results of the first and second queries, and controlling the mobile application to access the data in the second storage device (407) using the second access coding in case the results of the first query are the same as the results of the second query;
and
determining at a second time point that available processing resources in the mobile telecommunication device are higher than the required minimum processing resources and thereupon controlling the mobile application (415) to access the data in the first storage device (433) using the first access coding, the processing resources comprising the battery level of the mobile telecommunication device.

2. The method of any of the preceding claims, wherein the generating of the data structure in the second storage device (407) comprises:
- generating, by the generation unit (435), in the second storage device an intermediate data structure for storing the data in the intermediate data structure using a column-based storage technique;
- copying, by the generation unit (435), the relational database into the second storage device (407);
- generating, by the validation unit (437), a test program for accessing the data stored in the relational database and the intermediate data structure in the second storage device using the second access coding, wherein the test program comprises at least a part of the mobile application (415);
- running, by the validation unit (437), the test program on the intermediate data structure and the relational database and determining a respective first and second number of cache misses; wherein a cache miss refers to a failed attempt to read or write data in the cache of the main memory;
- selecting, by the analysis unit (439), one of the intermediate data structure and the relational database as the data structure based on the comparison between the first and second number of cache misses.

3. The method of claim 1, wherein the determining is triggered by an interaction of a user of the mobile application (415) with the mobile telecommunication device (400), the interaction comprising a selection of an icon of the mobile application (415) on a user interface of the mobile telecommunication device by the user.

4. The method of claim 1, wherein the determining is performed during execution of the mobile application.

5. The method of claim 4, further comprising suspending the execution of the mobile application until the comparison is performed.

6. A mobile telecommunication device (400) for providing data to a mobile application (415) installed in the mobile telecommunication device (400), the mobile telecommunication device (400) comprising first (433) and second (407) storage devices, the first storage device comprises a non-volatile memory and the second storage device comprises a volatile main memory (407), the data being stored in a relational database in the first storage device (433), , the non-volatile memory comprising a hard disk drive, wherein the mobile application (415) is configured to access the data using a first access coding comprising a first set of instructions of a first programming language, wherein the mobile telecommunication device (400) operates in a default energy consuming mode, the mobile telecommunication device (400) further comprising information indicative of minimum processing resources required for running the mobile application (415) with the first storage device (433), the mobile telecommunication device (400) comprising:
- an analysis unit (439) for switching from the default energy consuming mode to an energy saving mode for running the mobile application, the default energy consuming mode is different from the energy saving mode; wherein the switching is performed in response to determining, by the analysis unit (439), at a first time point that available processing resources in the mobile telecommunication device (400) are below required minimum processing resources by the mobile application (415), thereby
- a generation unit (435) for generating a data structure in the second storage device and copying the data from the relational database into the generated data structure such that the database in the second storage device has a column based structure; and generating a second access coding comprising a second set of instructions of a second programming language for providing the data stored in the second storage device to the mobile application, wherein the generating comprises converting the first set of instructions to the second set of instructions using a predefined correspondence table of the first and second programming languages; wherein the conversion of the first set of instructions comprises replacing the references to the first storage device in the first set of instructions by a reference to the second storage device;
- a validation unit (437) for generating first and second queries for querying the data on the first and second storage devices using the first and second access coding respectively; wherein the analysis unit (439) compares the results of the first and second queries, and controlling the mobile application to access the data in the second storage device (407) using the second access coding in case the results of the first query are the same as the results of the second query,
- and
- the analysis unit (439) determining at a second time point that available processing resources in the mobile telecommunication device are higher than the required minimum processing resources and thereupon controlling the mobile application (415) to access the data in the first storage device (433) using the first access coding, the processing resources comprising the battery level of the mobile telecommunication device.

## Patentansprüche

1. Telekommunikationsverfahren zum Bereitstellen von Daten an eine in einer mobilen Telekommunikationsvorrichtung (400) installierte mobile Anwendung (415), wobei die mobile Telekommunikationsvorrichtung eine erste (433) und eine zweite (407) Speichervorrichtung aufweist, die erste Speichervorrichtung (433) einen nichtflüchtigen Speicher umfasst und die zweite Speichervorrichtung (407) einen flüchtigen Hauptspeicher umfasst, der nichtflüchtige Speicher ein Festplattenlaufwerk umfasst, die Daten in einer relationalen Datenbank in der ersten Speichervorrichtung (433) gespeichert werden, wobei die mobile Anwendung (415) für den Zugriff auf die Daten unter Verwendung einer ersten Zugangscodierung konfiguriert ist, die einen ersten Satz Anweisungen einer ersten Programmiersprache umfasst, wobei die mobile Telekommunikationsvorrichtung (400) in einem Standard-Energieverbrauchsmodus betrieben wird, die mobile Telekommunikationsvorrichtung (400) eine Erzeugungs- (435), eine Validierungs- (437) und eine Analyseeinheit (439) aufweist, wobei die mobile Telekommunikationsvorrichtung (400) ferner Informationen aufweist, die für die Abarbeitung der mobilen Anwendung (415) mit der ersten Speichervorrichtung (433) erforderliche Mindest-Verarbeitungsressourcen erkennen lassen, wobei das Verfahren Folgendes aufweist: automatisches
- Umschalten durch die Analyseeinheit (439) von dem Standard-Energieverbrauchsmodus auf einen Energiesparmodus zum Abarbeiten der mobilen Anwendung, wobei der Standard-Energieverbrauchsmodus vom Energiesparmodus verschieden ist; wobei das Umschalten als Reaktion auf das Bestimmen durch die Analyseeinheit (439) an einem ersten Zeitpunkt, dass verfügbare Verarbeitungsressourcen in der mobilen Telekommunikationsvorrichtung (400) unter von der mobilen Anwendung (415) erforderten Mindestverarbeitungsressourcen sind, durchgeführt wird, dadurch
- Erzeugen durch die Erzeugungseinheit (435) einer Datenstruktur in der zweiten Speichervorrichtung und Kopieren der Daten aus der relationalen Datenbank in die erzeugte Datenstruktur, so dass die Datenbank in der zweiten Speichervorrichtung eine spaltenbasierte Struktur hat;
- Erzeugen einer zweiten Zugangscodierung, die einen zweiten Satz Anweisungen einer zweiten Programmiersprache aufweist, durch die Erzeugungseinheit (435) zum Bereitstellen der in der zweiten Speichervorrichtung (407) gespeicherten Daten an die mobile Anwendung (415), wobei das Erzeugen das Umwandeln des ersten Satzes Anweisungen in den zweiten Satz Anweisungen unter Verwendung einer vordefinierten Entsprechungstabelle der ersten und der zweiten Programmiersprachen aufweist; wobei die Umwandlung des ersten Satzes Anweisungen das Ersetzen der Verweise auf die erste Speichervorrichtung im ersten Satz Anweisungen durch einen Verweis auf die zweite Speichervorrichtung aufweist;
- Erzeugen erster und zweiter Abfragen zum Abfragen der Daten in der ersten (433) und der zweiten (407) Speichervorrichtung durch die Validierungseinheit (437) unter Verwendung der ersten bzw. der zweiten Zugangscodierung;
- Vergleichen der Ergebnisse der ersten und der zweiten Abfrage durch die Analyseeinheit (439) und Steuern der mobilen Anwendung zum Zugreifen auf die Daten in der zweiten Speichervorrichtung (407) unter Verwendung der zweiten Zugangscodierung in dem Fall, dass die Ergebnisse der ersten Abfrage die gleichen wie die Ergebnisse der zweiten Abfrage sind;
und
Bestimmen an einem zweiten Zeitpunkt, dass verfügbare Verarbeitungsressourcen in der mobilen Telekommunikationsvorrichtung höher als die erforderlichen Mindest-Verarbeitungsressourcen sind, und daraufhin Steuern der mobilen Anwendung (415) zum Zugreifen auf die Daten in der ersten Speichervorrichtung (433) unter Verwendung der ersten Zugangscodierung, wobei die Verarbeitungsressourcen den Akkuladezustand der mobilen Telekommunikationsvorrichtung umfassen.

2. Verfahren nach einem der vorhergehenden Ansprüche, wobei das Erzeugen der Datenstruktur in der zweiten Speichervorrichtung (407) Folgendes aufweist:
- Erzeugen einer Zwischendatenstruktur durch die Erzeugungseinheit (435) in der zweiten Speichervorrichtung zum Speichern der Daten in der Zwischendatenstruktur unter Verwendung einer spaltenbasierten Speichertechnik;
- Kopieren der relationalen Datenbank durch die Erzeugungseinheit (435) in die zweite Speichervorrichtung (407);
- Erzeugen eines Testprogramms durch die Validierungseinheit (437) zum Zugreifen auf die in der relationalen Datenbank und der Zwischendatenstruktur in der zweiten Speichervorrichtung gespeicherten Daten unter Verwendung der zweiten Zugangscodierung, wobei das Testprogramm wenigstens einen Teil der mobilen Anwendung (415) aufweist;
- Abarbeiten des Testprogramms durch die Validierungseinheit (437) an der Zwischendatenstruktur und der relationalen Datenbank und Bestimmen einer jeweiligen ersten und zweiten Anzahl von Cache-Misses, wobei ein Cache-Miss einen fehlgeschlagenen Versuch, Daten im bzw. in den Cache des Hauptspeichers zu lesen oder zu schreiben, bezeichnet;
- Auswählen durch die Analyseeinheit (439) von einer von der Zwischendatenstruktur und der relationalen Datenbank als die Datenstruktur auf Basis des Vergleichs zwischen der ersten und der zweiten Anzahl von Cache-Misses.

3. Verfahren nach Anspruch 1, wobei das Bestimmen durch eine Wechselwirkung eines Benutzers der mobilen Anwendung (415) mit der mobilen Telekommunikationsvorrichtung (400) ausgelöst wird, wobei die Wechselwirkung eine Auswahl eines Symbols der mobilen Anwendung (415) auf einer Benutzeroberfläche der mobilen Telekommunikationsvorrichtung durch den Benutzer umfasst.

4. Verfahren nach Anspruch 1, wobei das Bestimmen während der Ausführung der mobilen Anwendung durchgeführt wird.

5. Verfahren nach Anspruch 4, das ferner das Aussetzen der Ausführung der mobilen Anwendung, bis der Vergleich durchgeführt wurde, aufweist.

6. Mobile Telekommunikationsvorrichtung (400) zum Bereitstellen von Daten an eine in der mobilen Telekommunikationsvorrichtung (400) installierte mobile Anwendung (415), wobei die mobile Telekommunikationsvorrichtung (400) eine erste (433) und eine zweite (407) Speichervorrichtung aufweist, die erste Speichervorrichtung einen nichtflüchtigen Speicher umfasst und die zweite Speichervorrichtung einen flüchtigen Hauptspeicher (407) umfasst, die Daten in einer relationalen Datenbank in der ersten Speichervorrichtung (433) gespeichert werden, der nichtflüchtige Speicher ein Festplattenlaufwerk umfasst, wobei die mobile Anwendung (415) für den Zugriff auf die Daten unter Verwendung einer ersten Zugangscodierung konfiguriert ist, die einen ersten Satz Anweisungen einer ersten Programmiersprache umfasst, wobei die mobile Telekommunikationsvorrichtung (400) in einem Standard-Energieverbrauchsmodus betrieben wird, die mobile Telekommunikationsvorrichtung (400) ferner Informationen aufweist, die für die Abarbeitung der mobilen Anwendung (415) mit der ersten Speichervorrichtung (433) erforderliche Mindest-Verarbeitungsressourcen erkennen lassen, wobei die mobile Telekommunikationsvorrichtung (400) Folgendes aufweist:
- eine Analyseeinheit (439) zum Umschalten von dem Standard-Energieverbrauchsmodus auf einen Energiesparmodus zum Abarbeiten der mobilen Anwendung, wobei der Standard-Energieverbrauchsmodus vom Energiesparmodus verschieden ist; wobei das Umschalten als Reaktion auf das Bestimmen durch die Analyseeinheit (439) an einem ersten Zeitpunkt, dass verfügbare Verarbeitungsressourcen in der mobilen Telekommunikationsvorrichtung (400) unter von der mobilen Anwendung (415) erforderten Mindestverarbeitungsressourcen sind, durchgeführt wird, dadurch
- eine Erzeugungseinheit (435) zum Erzeugen einer Datenstruktur in der zweiten Speichervorrichtung und Kopieren der Daten aus der relationalen Datenbank in die erzeugte Datenstruktur, so dass die Datenbank in der zweiten Speichervorrichtung eine spaltenbasierte Struktur hat; und Erzeugen einer zweiten Zugangscodierung, die einen zweiten Satz Anweisungen einer zweiten Programmiersprache aufweist, zum Bereitstellen der in der zweiten Speichervorrichtung gespeicherten Daten an die mobile Anwendung, wobei das Erzeugen das Umwandeln des ersten Satzes Anweisungen in den zweiten Satz Anweisungen unter Verwendung einer vordefinierten Entsprechungstabelle der ersten und der zweiten Programmiersprachen aufweist; wobei die Umwandlung des ersten Satzes Anweisungen das Ersetzen der Verweise auf die erste Speichervorrichtung im ersten Satz Anweisungen durch einen Verweis auf die zweite Speichervorrichtung aufweist;
- eine Validierungseinheit (437) zum Erzeugen erster und zweiter Abfragen zum Abfragen der Daten in der ersten und der zweiten Speichervorrichtung unter Verwendung der ersten bzw. der zweiten Zugangscodierung; wobei die Analyseeinheit (439) die Ergebnisse der ersten und der zweiten Abfrage vergleicht, und Steuern der mobilen Anwendung zum Zugreifen auf die Daten in der zweiten Speichervorrichtung (407) unter Verwendung der zweiten Zugangscodierung in dem Fall, dass die Ergebnisse der ersten Abfrage die gleichen wie die Ergebnisse der zweiten Abfrage sind, und
- Bestimmen an einem zweiten Zeitpunkt durch die Analyseeinheit (439), dass verfügbare Verarbeitungsressourcen in der mobilen Telekommunikationsvorrichtung höher als die erforderlichen Mindest-Verarbeitungsressourcen sind, und daraufhin Steuern der mobilen Anwendung (415) zum Zugreifen auf die Daten in der ersten Speichervorrichtung (433) unter Verwendung der ersten Zugangscodierung, wobei die Verarbeitungsressourcen den Akkuladezustand der mobilen Telekommunikationsvorrichtung umfassen.

## Revendications

1. Procédé de télécommunication pour fournir des données à une application mobile (415) installée dans un dispositif de télécommunication mobile (400), le dispositif de télécommunication mobile (400) comprenant un premier (433) et un second (407) dispositifs de stockage, le premier dispositif de stockage (433) comprend une mémoire non volatile et le second dispositif de stockage comprend une mémoire principale volatile (407), la mémoire non volatile comprenant une unité de disque dur, les données étant stockées dans une base de données relationnelle dans le premier dispositif de stockage (433), où l'application mobile (415) est configurée pour accéder aux données en utilisant un premier codage d'accès comprenant un premier ensemble d'instructions d'un premier langage de programmation, où le dispositif de télécommunication mobile (400) fonctionne dans un mode de consommation d'énergie par défaut, le dispositif de télécommunication mobile (400) comprenant une unité de génération (435), de validation (437) et d'analyse (439), le dispositif de télécommunication mobile (400) comprenant en outre une information indicatrice des ressources minimales nécessaires pour faire fonctionner l'application mobile (415) avec le premier dispositif de stockage (433), le procédé comprenant automatiquement :
- le basculement, par l'unité d'analyse (439), du mode de consommation d'énergie par défaut vers un mode d'économie d'énergie pour faire fonctionner l'application mobile, le mode de consommation d'énergie par défaut est différent du mode d'économie d'énergie ; où le basculement est réalisé en réponse à la détermination, par l'unité d'analyse (439), à un premier instant, que les ressources disponibles pour le fonctionnement dans le dispositif de télécommunication mobile (400) sont en dessous des ressources minimales nécessaires pour le fonctionnement par l'application mobile (415), provoquant ainsi
- la génération, par l'unité de génération (435), d'une structure de données dans le second dispositif de stockage et la copie des données à partir de la base de données relationnelle dans la structure de données générée de sorte que la base de données dans le second dispositif de stockage a une structure basée sur des colonnes ;
- la génération, par l'unité de génération (435), d'un second codage d'accès comprenant un second ensemble d'instructions d'un second langage de programmation pour fournir les données stockées dans le second dispositif de stockage (407) à l'application mobile (415), où la génération comprend la conversion du premier ensemble d'instructions vers le second ensemble d'instructions en utilisant une table de correspondance prédéfinie du premier et du second langage de programmation ; où la conversion du premier ensemble d'instructions comprend le remplacement des références au premier dispositif de stockage dans le premier ensemble d'instructions par une référence au second dispositif de stockage ;
- la génération, par l'unité de validation (437), d'une première et d'une seconde requête pour interroger les données sur le premier (433) et sur le second (407) dispositifs de stockage en utilisant le premier et le second codage d'accès respectivement ;
- la comparaison, par l'unité d'analyse (439), des résultats des première et seconde requêtes, et le contrôle de l'application mobile pour accéder aux données dans le second dispositif de stockage (407) en utilisant le second codage d'accès au cas où les résultats de la première requête sont identiques aux résultats de la seconde requête ;
et
la détermination, à un second instant, que les ressources disponibles pour le fonctionnement dans le dispositif de télécommunication mobile sont plus élevées que les ressources minimales nécessaires pour le fonctionnement et sur ce sujet le contrôle de l'application mobile (415) pour accéder aux données dans le premier dispositif de stockage (433) en utilisant le premier codage d'accès, les ressources pour le fonctionnement comprenant le niveau de la batterie du dispositif de télécommunication mobile.

2. Procédé selon l'une quelconque des revendications précédentes, dans lequel la génération de la structure des données dans le second dispositif de stockage (407) comprend :
- la génération, par l'unité de génération (435), dans le second dispositif de stockage, d'une structure de données intermédiaire pour stocker les données dans la structure de données intermédiaire en utilisant une technique de stockage fondée sur des colonnes ;
- la copie, par l'unité de génération (435), de la base de données relationnelle dans le second dispositif de stockage (407) ;
- la génération, par l'unité de validation (437), d'un programme de test pour accéder aux données stockées dans la base de données relationnelle et dans la structure de données intermédiaire dans le second dispositif de stockage en utilisant le second codage d'accès, où le programme de test comprend au moins une partie de l'application mobile (415) ;
- l'exploitation, par l'unité de validation (437), du programme de test sur la structure de données intermédiaire et la base de données relationnelle et la détermination d'un premier et d'un second nombre respectifs d'absences d'informations dans l'antémémoire ; où une absence d'information dans l'antémémoire fait référence à une tentative ratée de lecture ou d'écriture des données dans le cache de la mémoire principale ;
- le choix, par l'unité d'analyse (439), d'une parmi la structure de données intermédiaire et la base de données relationnelle en tant que structure de données sur la base de la comparaison entre le premier et le second nombre d'absences d'informations dans l'antémémoire.

3. Procédé selon la revendication 1, dans lequel la détermination est déclenchée par une interaction d'un utilisateur de l'application mobile (415) avec le dispositif de télécommunication mobile (400), l'interaction comprenant le choix d'une icône de l'application mobile (415) sur une interface d'utilisateur du dispositif de télécommunication mobile par l'utilisateur.

4. Procédé selon la revendication 1, dans lequel la détermination est réalisée au cours de l'exécution de l'application mobile.

5. Procédé selon la revendication 4, comprenant en outre la suspension de l'exécution de l'application mobile jusqu'à ce que la comparaison soit réalisée.

6. Dispositif de télécommunication mobile (400) pour fournir des données à une application mobile (415) installée dans le dispositif de télécommunication mobile (400), le dispositif de télécommunication mobile (400) comprenant un premier (433) et un second (407) dispositif de stockage, le premier dispositif de stockage comprend une mémoire non volatile et le second dispositif de stockage comprend une mémoire principale volatile (407), les données étant stockées dans une base de données relationnelle dans le premier dispositif de stockage (433), la mémoire non volatile comprenant une unité de disque dur, où l'application mobile (415) est configurée pour accéder aux données en utilisant un premier codage d'accès comprenant un premier ensemble d'instructions d'un premier langage de programmation, où le dispositif de télécommunication mobile (400) fonctionne dans un mode de consommation d'énergie par défaut, le dispositif de télécommunication mobile (400) comprenant en outre une information indicatrice des ressources minimales nécessaires pour le fonctionnement afin d'exploiter l'application mobile (415) avec le premier dispositif de stockage (433), le dispositif de télécommunication mobile (400) comprenant :
- une unité d'analyse (439) pour le basculement du mode de consommation d'énergie par défaut vers un mode d'économie d'énergie pour faire fonctionner l'application mobile, le mode de consommation d'énergie par défaut est différent du mode d'économie d'énergie ; où le basculement est réalisé en réponse à la détermination, par l'unité d'analyse (439), à un premier instant, que les ressources de fonctionnement disponibles dans le dispositif de télécommunication mobile (400) sont en dessous des ressources minimales nécessaires pour le fonctionnement par l'application mobile (415), ce par quoi
- une unité de génération (435) pour générer une structure de données dans le second dispositif de stockage et pour copier les données à partir de la base de données relationnelle dans la structure de données générée de sorte que la base de données dans le second dispositif de stockage a une structure fondée sur des colonnes ; et pour générer un second codage d'accès comprenant un second ensemble d'instructions d'un second langage de programmation pour fournir les données stockées dans le second dispositif de stockage à l'application mobile, où la génération comprend la conversion du premier ensemble d'instructions vers le second ensemble d'instructions en utilisant une table de correspondance prédéfinie des premier et second langages de programmation ; où la conversion du premier ensemble d'instructions comprend le remplacement des références au premier dispositif de stockage dans le premier ensemble d'instructions par une référence au second dispositif de stockage ;
- une unité de validation (437) pour générer une première et une seconde requête afin d'interroger les données sur les premier et second dispositifs de stockage en utilisant le premier et le second codage d'accès respectivement ; où l'unité d'analyse (439) compare les résultats des première et seconde requêtes, et pour contrôler l'application mobile afin d'accéder aux données dans le second dispositif de stockage (407) en utilisant le second codage d'accès au cas où les résultats de la première requête sont identiques aux résultats de la seconde requête,
- et
- l'unité d'analyse (439) déterminant à un second instant que les ressources disponibles pour le fonctionnement dans le dispositif de télécommunication mobile sont plus élevées que les ressources minimales nécessaires pour le fonctionnement et, sur ce sujet, le contrôle de l'application mobile (415) pour accéder aux données dans le premier dispositif de stockage (433) en utilisant le premier codage d'accès, les ressources pour le fonctionnement comprenant le niveau de la batterie du dispositif de télécommunication mobile.
